# EUROPEAN PATENT APPLICATION

(11) **EP 1 235 176 A1**
(43) Date of publication of application: **28.08.2002**
(21) Application number: 02003749.5
(22) Date of filing: 19.02.2002
(51) Int. Cl.: G06F 17/60

(54) **Integrative management system**

(30) Priority: 27.02.2001 JP 2001052039
(71) Applicant: HONDA GIKEN KOGYO KABUSHIKI KAISHA, Minato-ku Tokyo (JP)
(72) Inventor: Kawamoto, Hideyo, c/o Honda Giken Kogyo K.K., Tokyo (JP)
(74) Representative: Prechtel, Jörg, Dipl.-Phys. Dr.

(57) **Abstract**

An integrative management system of tube/hose parts is provided, which can correctly change bulk parts upon changes of tube/hose pats. This integrative management system includes a database for managing in a centralized manner tube/hose parts together with corresponding rolled long bulk parts each being a sales unit of corresponding one of the tube/hose parts by relating bulk part codes of the bulk parts to part codes of corresponding tube/hose parts, respectively; and data manipulation means for search, renewal, erasure and entry of data stored in the database.

## Description

### BACKGROUND OF THE INVENTION

### Field of the invention

This invention relates to an integrative management system of tubes or hoses (hereinafter called tube/hose elements) prepared in form of a sales unit of cuts of rolled long elements.

### Description of the Related Art

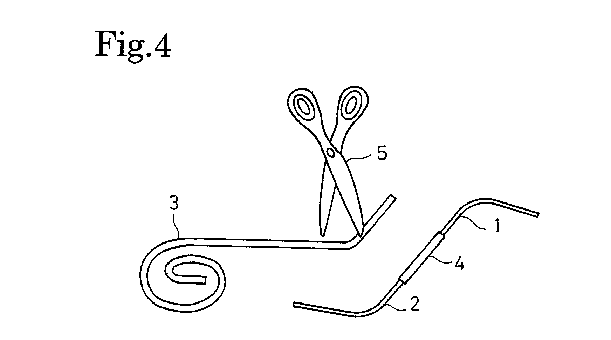

Tube/hose parts used as parts of, for example, vehicles, are mainly used to connect a pipe 1 and a pipe 2 as shown in Fig. 4. Actually, the distance between the pipe 1 and the pipe 2 is often out of a certain regulated length, and most of vehicles have considerable errors in that distance.

To connect the pipes 1, 2, therefore, an appropriate length of tube/hose part 4 is cut out at the job site with scissors 5 from a roll of long tube/hose 3 having a diameter matching with the pipes 1, 2, and it is put on the pipes 1, 2 as shown in Fig. 4.

Therefore, tube/hose elements are prepared in form of rolls of long tubes/hoses each as the sales unit, and numerical codes of bulk parts are also marked additionally on a list of parts, or the like, together with the numerical codes of the parts.

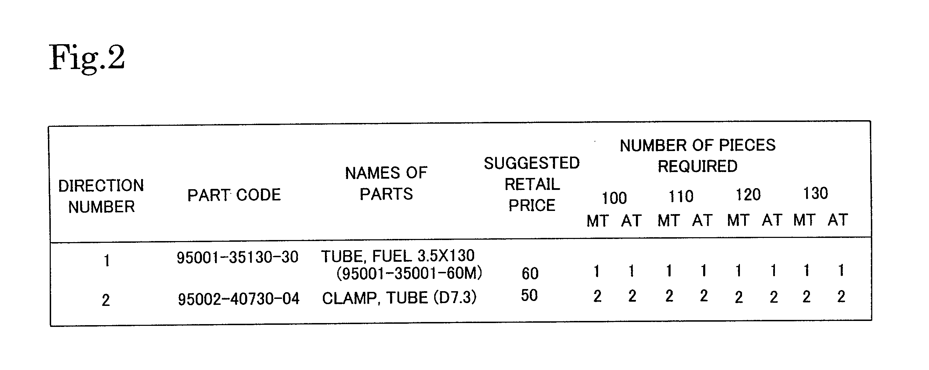

Fig. 2 is an example of such lists of parts. The numerical codes in parentheses under the column of "names of parts" are numerical codes of bulk parts. Heretofore, however, bulk parts have not been managed by centralized management.

When pipes are changed by a design change, including their diameters, tube/hose parts for connecting the pipes must be changed to meet the diameters of the pipes, and hence the bulk parts must be changed accordingly.

Since new introduction and scrap-and-building of numerical codes of parts by design changes from time to time were manually managed occasionally, and bulk parts were not managed by centralized management, man-caused mistakes were liable to occur.

For example, although a newly prepared parts list puts proper codes after the change, it often occurs that the codes before the change are still used as the bulk part codes.

Additionally, since each bulk part is each sales unit, such an error might impose an expense for later corrective transactions.

Taking those into consideration, it is an object of the invention to provide an integrative management system of tube/hose parts, capable of automatically changing bulk parts in conformity to changes of tube/hose parts without errors.

### SUMMARY OF THE INVENTION

To accomplish the object, according to the invention, there is provided integrative management system of tube/hose parts comprising: a database for managing in a centralized manner tube/hose parts together with corresponding rolled long bulk parts each being a sales unit of corresponding one of said tube/hose parts by relating bulk part codes of said bulk parts to part codes of corresponding tube/hose parts, respectively; and data manipulation means for search, renewal, erasure and entry of data stored in said database.

According to the invention, bulk part codes are under centralized management in a database in association with part codes of corresponding tube/hose parts together with bulk parts. Therefore, changes of bulk parts by changes of tube/hose parts can be automatically managed without errors by a data manipulation means on the basis of the database.

In the present invention, the system may include an output means for extracting each bulk part code from the database and outputting it by indicating it together with corresponding one of the part codes of the tube/hose parts.

In this manner, since the bulk part numerical codes of bulk parts properly changed automatically upon changes of tube/hose parts are output together with the part codes from the output means, the proper bulk part codes are automatically shown on a parts list, for example, together with the part codes.

In the present invention, the database may be managed by bulk part codes in a specification in which materials and bulk lengths of the bulk parts are integrated.

In this case, by integrating materials of bulk parts in several classes and integrating the bulk lengths in several classes, and thereby managing them by bulk part codes based on that specification, simplified and efficient management is possible.

In the present invention, the bulk part codes may include information about inner diameters and standard lengths of the bulk parts.

In this manner, when an inquiry is made about a bulk part code in a parts list, for example, its inner diameter and standard length can also be known conveniently.

### BRIEF DESCRIPTION OF THE DRAWINGS

Fig. 1 is a schematic block diagram that shows an integrative management system of tube/hose parts for vehicles according to an embodiment of the invention.
Fig. 2 is a diagram that shows an example of parts list.
Fig. 3 is a diagram that shows an example of conversion table of part codes of general-use tubes and bulk part codes.
Fig. 4 is an explanatory diagram that shows how a roll of elongated part (bulk part) is cut and attached to a pipe.

### DESCRIPTION OF THE PREFERRED EMBODIMENT

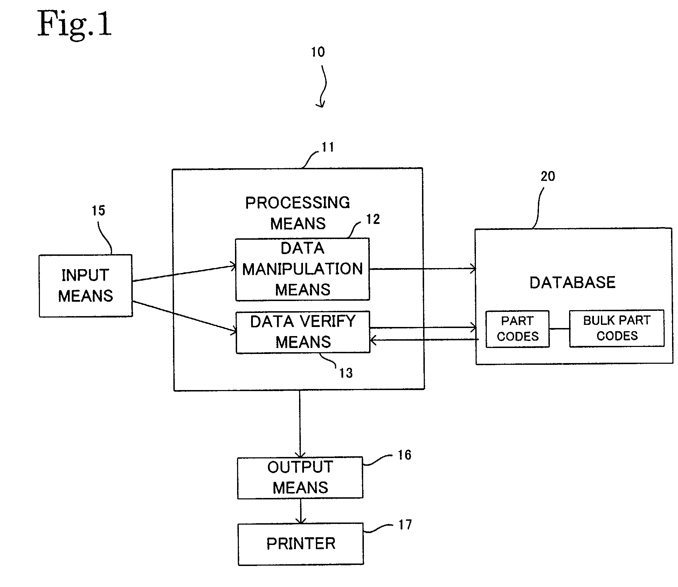

An embodiment of the invention will now be explained below with reference to Figs. 1 through 3.

An integrative management system 10 taken here as an embodiment is for tube/hose parts of vehicles, and a schematic block diagram of the integrative management system 10 is shown in Fig. 1.

The integrative management system 10 is made up of a computer, and its processing means 11 can execute processing based on a database 20 in accordance with data and instructions input from an input means 15 and can output the result of the processing through an output means by driving a printer 17.

The database 20 is of a type for centralized accumulation and management of tube/hose parts, such as fuel hoses or fuel tubes for vehicles and other hoses or tubes for connecting other pipes.

Thus the database 20 manages tube/hose parts together with bulk parts in an integrative manner, maintaining the relationship between bulk part codes of rolled long bulk parts as sales units of tube/hose parts and part codes of respective corresponding tube/hose parts.

As to bulk parts, their materials are unified in several kinds of materials and their bulk lengths are also unified in several types of lengths (for example, three kinds of 1m, 3m and 8m), thereby to manage the bulk parts by bulk part codes according to the specification. By such unification, they can be simplified and can be managed efficiently.

A data manipulation means 12 of the processing means 11 is in charge of search, renewal, erasure and entry of data stored in the database 20 according to instructions from the input means 15.

Since part codes and bulk part codes are managed in a centralized manner under such relationship between them, in case there is some change in tube/hose parts, once one portion of the data to be changed is corrected, proper codes after the change are output without correction errors by any of various output forms. Thus, efficient management is ensured without errors.

Once a print instruction is issued to print the parts list, in case a part code of a tube/hose part is written on the parts list, a data verify means 13 verifies the bulk part code related to the part code in the database 20 and extracts it therefrom, and can automatically add the bulk part code.

Therefore, as in the parts list shown in Fig. 2, concerning tube/hose parts, bulk part codes are shown in parentheses together with the part codes. In this manner, the system can save manhours and can prevent entry errors in the operation of making the parts list.

Each bulk part code contains information about the inner diameter and the standard length of that bulk part. For example, in the example of "95001-3501-69M" shown on the parts list of Fig. 2, it is known from 35001 that the bulk part has the inner diameter of 35 mm and the standard length of 1m.

It is convenient that the inner diameter and the standard length can be known from the bulk part code. Similarly, each part code also contains the inner diameter and the length of the corresponding tube/hose part.

Since the data verify means 13 automatically verifies part codes of tube/hose parts and bulk part codes, based on the database, without man-caused mistakes, it is possible to reduce the manhours in the ordering work and to improve the accuracy of the stock management.

For example, even upon receipt of an order indicating the part number of a tube/hose part, the proper bulk part number can be extracted by correct verification in the database by the data verify means 13, and the corresponding bulk part of that bulk part code can be shipped.

Consequently, it is sufficient for the orderer to stock only bulk parts for tube/hose parts.

In addition, it is easy to previously make a conversion table between part codes and bulk part codes of tube/hose parts by means of the data verify means 13 on the bases of the database and to post the table on a parts list or a service manual.

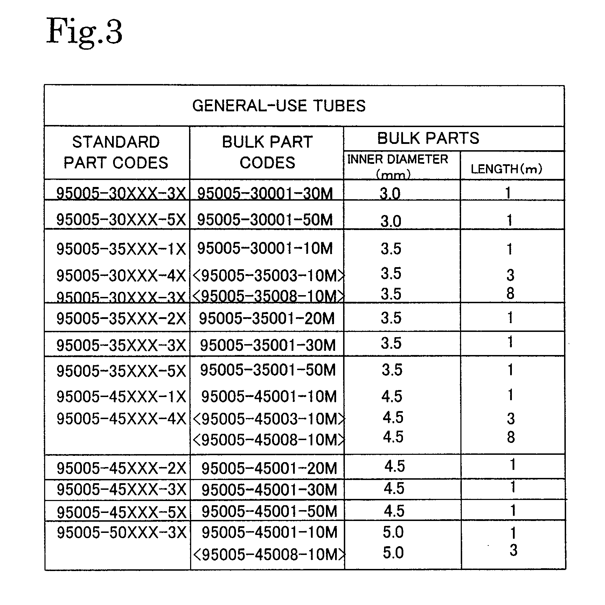

Fig. 3 is an example of conversion table between part codes of general-use tubes and bulk part codes. It is convenient for users to easily verify and confirm correspondence between part codes of respective tubes and corresponding bulk part codes.

An integrative management system of tube/hose parts is provided, which can correctly change bulk parts upon changes of tube/hose pats. This integrative management system includes a database for managing in a centralized manner tube/hose parts together with corresponding rolled long bulk parts each being a sales unit of corresponding one of the tube/hose parts by relating bulk part codes of the bulk parts to part codes of corresponding tube/hose parts, respectively; and data manipulation means for search, renewal, erasure and entry of data stored in the database.

## Claims

1. An integrative management system of tube/hose parts comprising:
a database for managing in a centralized manner tube/hose parts together with corresponding rolled long bulk parts each being a sales unit of corresponding one of said tube/hose parts by relating bulk part codes of said bulk parts to part codes of corresponding tube/hose parts, respectively; and
data manipulation means for search, renewal, erasure and entry of data stored in said database.

2. An integrative management system of tube/hose parts according to claim 1 further comprising an output means for each said bulk part code from said database and outputting it by indicating it together with corresponding one of said part codes of the tube/hose parts.

3. An integrative management system of tube/hose parts according to claim 1 wherein said database manages said bulk parts by said bulk part codes in a specification in which materials and bulk lengths thereof are integrated.

4. An integrative management system of tube/hose parts according to claim 1 wherein each said bulk part code contains information about the inner diameter and the standard length of the corresponding bulk part.
